(19) Europäisches Patentamt
European Patent Office
Office européen des brevets

(11) Publication number: **0 073 102**
**A2**

(12) # EUROPEAN PATENT APPLICATION

(21) Application number: 82303896.3

(51) Int. Cl.³: F 16 H 3/66

(22) Date of filing: 22.07.82

(30) Priority: 22.07.81 GB 8122638

(43) Date of publication of application: 02.03.83 Bulletin 83/9

(84) Designated Contracting States: DE FR GB IT NL SE

(71) Applicant: AB VOLVO
S-405 08 Göteborg(SE)

(72) Inventor: Hedlund, Sven Benny
Hedvägen 3
S-43091 Hönö(SE)

(72) Inventor: Miller, Albert Arthur
Caddon Lodge 4 Whytbank Row
Clovenfords Galashiels, TD1 3NE(GB)

(72) Inventor: Hyttinen, Veikko Johannes
Lupinvägen 1
S-43400 Kungsbacka(SE)

(74) Representative: Valentine, Francis Anthony Brinsley et al,
REDDIE & GROSE 16 Theobalds Road
London WC1X 8PL(GB)

(54) **Vehicle transmissions.**

(57) Epicyclic gearing for a vehicle transmission includes at least four epicyclic gear trains 1, 2, 3, 4. The planet carrier L4 of the fourth train is secured to the output shaft and the sunwheels of both the first and fourth trains 1 and 4 are connected to the input shaft 10 by a clutch C1. The first and fourth trains 1 and 4 each provide, independently a low ratio, each of which can be chosen as desired while the second and third gear trains provide higher ratios.

FIG. 2

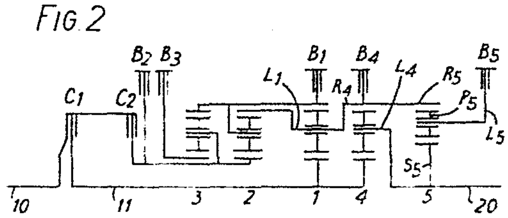


EP 0 073 102 A2

VEHICLE TRANSMISSIONS

The present invention relates to change-speed transmissions for vehicles of the kind comprising a plurality of epicyclic gear trains.

According to one aspect of the present invention, there is provided epicyclic change-speed gearing interconnecting an input member and an output member, wherein the output member is connected to the planet carrier of an epicyclic gear train of low speed gearing, the sun wheel of this gear train being connectable to the input member by a clutch, and the low speed gearing includes a further epicyclic gear train having its sun wheel connected to the output member, its planet carrier provided with releasable holding means and the annuli of the two low speed gear trains are connected together and to further releasable holding means, a second clutch provides an alternative driving connection between the input member and a reaction member of the higher speed gearing to provide low speed reverse drives when the first clutch is disengaged and one or the other of the holding means of the low speed gearing is engaged.

The higher speed gearing may conveniently be of the kind disclosed in U.S. patent specification no. 4228697 and comprise a first epicyclic gear train having its sun wheel and planet carrier respectively connected to the sun wheel and annulus of the first gear train of the low speed gearing, a second gear train having its planet carrier connected to the annulus of the first gear train and its annulus connected to the planet carrier of the first gear train, and a third gear train having its annulus connected to the carrier of the second gear train and to releasable holding means, its carrier connected to the sun wheel of the second gear train and to the second clutch and to releasable holding means and the sun wheel of the third train is provided with further releasable holding means.

Such an arrangement may advantageously be modified in that the planet carrier of the first higher ratio gear train is connected to the carrier of the first gear train of the lower ratio gearing and not to its annulus.

According to another aspect of the invention there is provided epicyclic change-speed gearing comprising a three higher speed ratio epicyclic gear set comprising three epicylic gear trains and a lower ratio gear train, each gear train comprising a sun wheel, an internally toothed annulus and planet pinions meshing with both the sun wheel and the annulus and mounted in a planet carrier, wherein the planet carrier of the low train, the planet carrier of the first train and the annulus of the second train are all connected to the output member, the sun wheels of the first train and the low train are connected to each other and through a first clutch to an input member, the sun wheel of the second train is connected to the carrier of the third gear train and to releasable holding means and further through a second clutch to the input member, the annuli of the first and third gear trains are connected to the planet carrier of the second gear train and to releasable holding means, and further separate releasable holding means are provided for selectively holding the annulus of the low gear train and the sun wheel of the third gear train.

Embodiments of the invention will now be described by way of Example with reference to the accompanying drawings, in which:-

Figs. 1, 2 and 3 each show diagrammatically the lay out of change-speed gearing for three embodiments of the various aspects of the invention; and

Figures 4a and 4b together show an embodiment of the invention of the kind indicated in Figure 2.

In the transmission shown in Figure 1, an input shaft 10 is secured to the input of a clutch C1, the output of which clutch is secured to a shaft 11. The transmission has five epicyclic gear trains of which the first three provide higher gear ratios while the other trains 4 and 5, provide lower gear ratios. Each of the gear trains comprises a sun gear S, an internally toothed ring gear R, a set of planet pinions P which mesh with both the sun gear and the ring gear and are mounted for rotation about their axes in a planet carrier L, which is itself mounted about the common axes of the transmission.

The shaft 11 carries the sun gears S1 and S4. The planet carriers L1 and L4 are connected to the output member 20 of the transmission as is the ring gear R2 of the second gear train. The planet carrier L2 of the second gear train is connected to the ring gears R1 and R3 of the first and third gear trains.

A hollow sleeve 13 connects the sun gear S2 of the second gear train and the planet carrier L3 of the third gear train to the output member of a second clutch C2, the input member is which is connected by a cylindrical wall 14 to the input member 10. Selectively operable braking means or clutches B1, B2, B3, B4 and B5 are independently energisable to hold respectively the ring gear R1, the sun gear S2, the sun gear S3, the annulus or ring gear R4 and the planet carrier L5 stationary. The ring gears R4 and R5 are connected together and the sun gear S5 is connected to the output shaft 20.

If the numbers of teeth in the various elements of the epicyclic gear trains are as follows:

| TRAIN | 1 | 2 | 3 | 4 | 5 |
|---|---|---|---|---|---|
| No. of teeth in | | | | | |
| Ring gear | 84 | 84 | 84 | 84 | 84 |
| Sun gear | 48 | 48 | 40 | 24 | 48 |
| Planet pinions | 18 | 18 | 22 | 30 | 18 |

The ratios obtained by engaging the various clutches and brakes are as shown in Table 1.

TABLE 1

| | | | Brakes/clutches engaged |
|---|---|---|---|
| Low ratio | = | 6.5 | Cl B5 |
| 1st speed ratio | = | 4.5 | Cl B4 |
| 2nd speed ratio | = | 2.75 | Cl Bl |
| 3rd speed ratio | = | 1.636 | Cl B2 |
| 4th speed ratio | = | 1.272 | Cl B3 |
| 5th speed ratio | = | 1.00 | Cl C2 |
| 6th speed ratio | = | 0.572 | C2 B3 |
| Reverse 1 | = | -7.64 | C2 B5 |
| Reverse 2 | = | -4.5 | C2 B4 |
| Reverse 3 | = | -1.75 | C2 Bl |

Figure 2 shows a modified form of the transmission shown in Figure 1. In this modification, the planet carrier L1 of the first gear train and the ring gear R2 of the second gear train are connected to the ring gears R4 and R5 instead of to the output shaft 20.

If the numbers of teeth in the various elements of the gear trains are as follows:

| TRAIN | 1 | 2 | 3 | 4 | 5 |
|---|---|---|---|---|---|
| No. of teeth in | | | | | |
| Ring gear | 84 | 84 | 84 | 84 | 84 |
| Sun gear | 28 | 40 | 40 | 24 | 48 |
| Planet pinions | 28 | 22 | 22 | 30 | 18 |

then the ratios obtained by engaging the various clutches and brakes are as shown in Table 2.

TABLE 2

| | | | Brakes/clutches engaged |
|---|---|---|---|
| Low ratio | = | 6.5 | Cl B5 |
| 1st higher speed ratio | = | 4.5 | Cl B4 |
| 2nd higher speed ratio | = | 2.4 | Cl Bl |
| 3rd higher speed ratio | = | 1.62 | Cl B2 |
| 4th higher speed ratio | = | 1.285 | Cl B3 |
| 5th higher speed ratio | = | 1.00 | Cl C2 |
| 6th higher speed ratio | = | 0.54 | C2 B3 |
| Reverse 1 | = | -7.88 | C2 B5 |
| Reverse 2 | = | -4.65 | C2 B4 |
| Reverse 3 | = | -1.26 | C2 Bl |

Figure 3 shows another modification of the transmission shown in Figure 1 in which the fifth gear train 5 is omitted. With this arrangement, the same ratios are available as in the case of Figure 1 with the exception that the lowest forward and reverse ratios are not available.

It will be noted that in each of the embodiments described above, changing from one ratio to an adjacent ratio merely involves releasing one clutch or brake and engaging one other clutch or brake, thereby facilitating smooth changes between adjacent ratios.

Figures 4a and 4b together show a practical embodiment of a transmission of the kind shown in Figure 2. It will be noted that each of the clutches Cl and C2 and brakes Bl, B2, B3, B4 and B5 is of the multiplate disc type and is engaged by means of hydraulic pressure applied to the back of an annular piston Q.

A hydro-dynamic retarder 41 surrounds the first clutch Cl and its rotary member 42 is secured to the input element 43 of the clutch Cl and thus to the input shaft 10. The stationary portion 44 of the retarder 41 is secured to the casing 45 of the transmission.

CLAIMS

1. Epicyclic change-speed gearing interconnecting an input member (10) and an output member (20), wherein the output member (20) is connected to the planet carrier (L4) of an epicyclic gear train (4) of low speed gearing, the sun wheel (S4) of this gear train being connectable to the input member (10) by a clutch (C1), and the low speed gearing includes a further epicyclic gear train (5) having its sun wheel (S5) connected to the output member (20), its planet carrier (L5) provided with releaseable holding means (B5) and the annuli (R4, R5) of the two low speed gear trains (4,5) are connected together and to further releaseable holding means (B4), a second clutch (C2) provides an alternative driving connection between the input member (10) and a reaction member (S2) of an epicyclic gear train (2) of higher speed gearing (1,2,3) to provide low speed reverse drives when the first clutch (C1) is disengaged and one or the other of the holding means (B4 or B5) of the low speed gearing (4,5) is engaged, and wherein the higher speed gearing comprises a first epicyclic gear train (1) having its sun wheel (S1) and planet carrier (L1) respectively connected to the sun wheel (S4) and annulus (R4) of the first gear train (4) of the low speed gearing, a second gear train (2) having its planet carrier (L2) connected to the annulus (R1) of the first gear train and its annulus (R2) connected to the planet carrier (L1) of the first gear train, and a third gear train (3) having its annulus (R3) connected to the carrier (L2) of the second gear train and to releaseable holding means (B1), its carrier (L3) connected to the sun wheel (S2) of the second gear train and to the second clutch (C2) and to releaseable holding means (B2) and the sun wheel (S3) of the third train is provided with further releaseable holding means (B3).

2. Epicyclic change speed gearing according to Claim 1 modified in that the planet carrier (L1) of the first higher ratio gear train is connected to the carrier (L4) of the first gear train (4) of the lower ratio gearing and not to the annulus (R4).

3. Epicyclic change-speed gearing comprising a higher speed ratio epicyclic gear set comprising three epicyclic gear trains (1,2,3) and a lower ratio gear train (4), each gear train comprising a sun wheel (S), an internally toothed annulus (R) and planet pinions (P) meshing with both the sun wheel and the annulus and mounted in a planet carrier (L), wherein the planet carrier (L4) of the low train, the planet carrier (L1) of the first train and the annulus (R2) of the second train are all connected to the output member (20), the sun wheels (S1 and S4) of the first train and the low train are connected to each other and through a first clutch (C1) to an input member (10), the sun wheel (S2) of the second train is connected to the carrier (L3) of the third gear train and to releasable holding means (B2) and further through a second clutch (C2) to the input member (10), the annuli (R1 and R3) of the first and third gear trains are connected to the planet carrier (L2) of the second gear train and to releaseable holding means (B1), and further separate releasable holding means (B4,B3) are provided for selectively holding the annulus (R4) of the low gear train and the sun wheel (S3) of the third gear train.

0073102

FIG.1

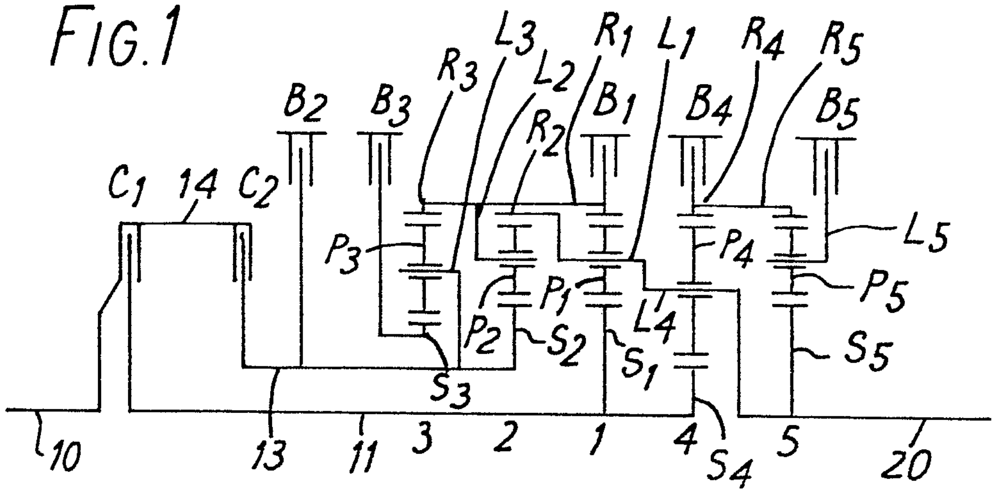


FIG.2

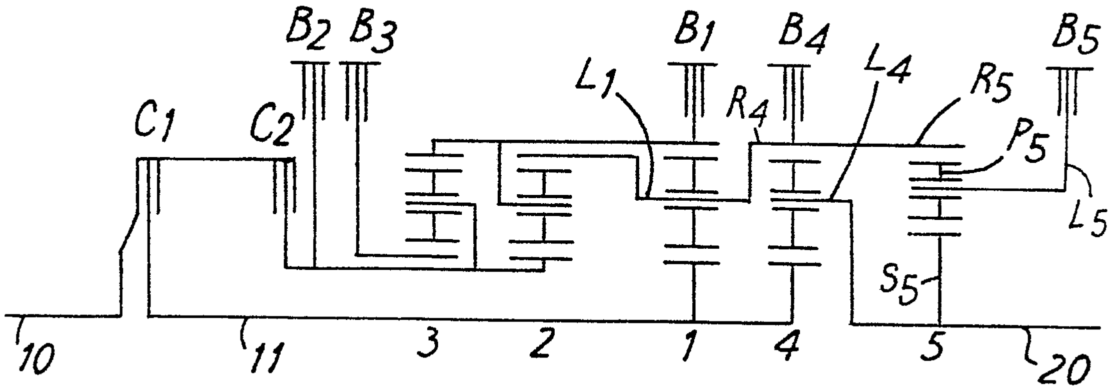


FIG.3

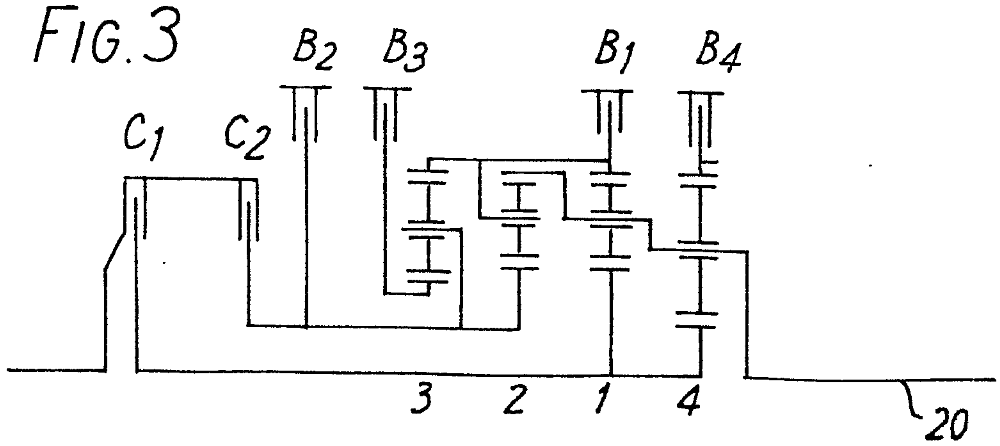

0073102



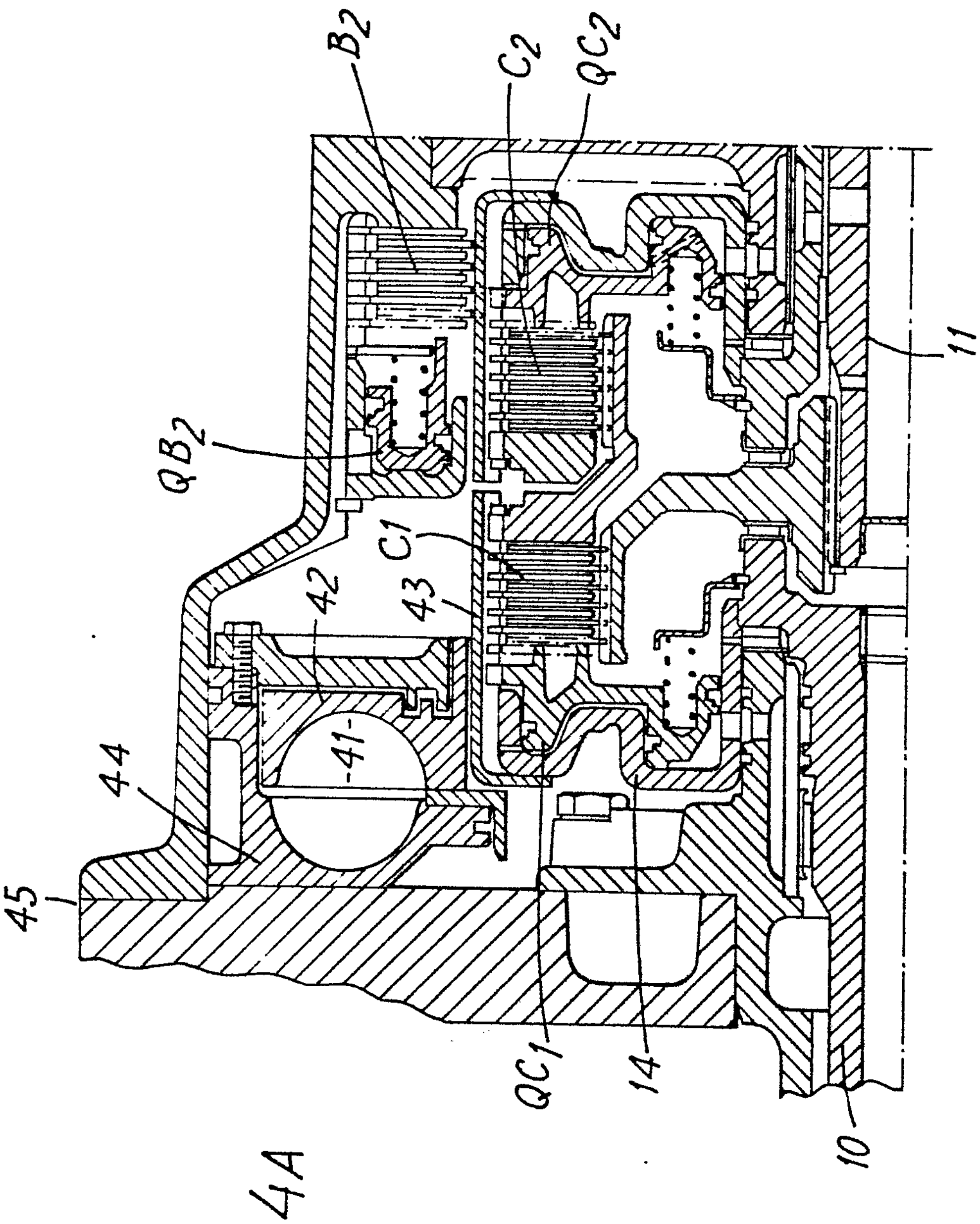


FIG.4A

0073102



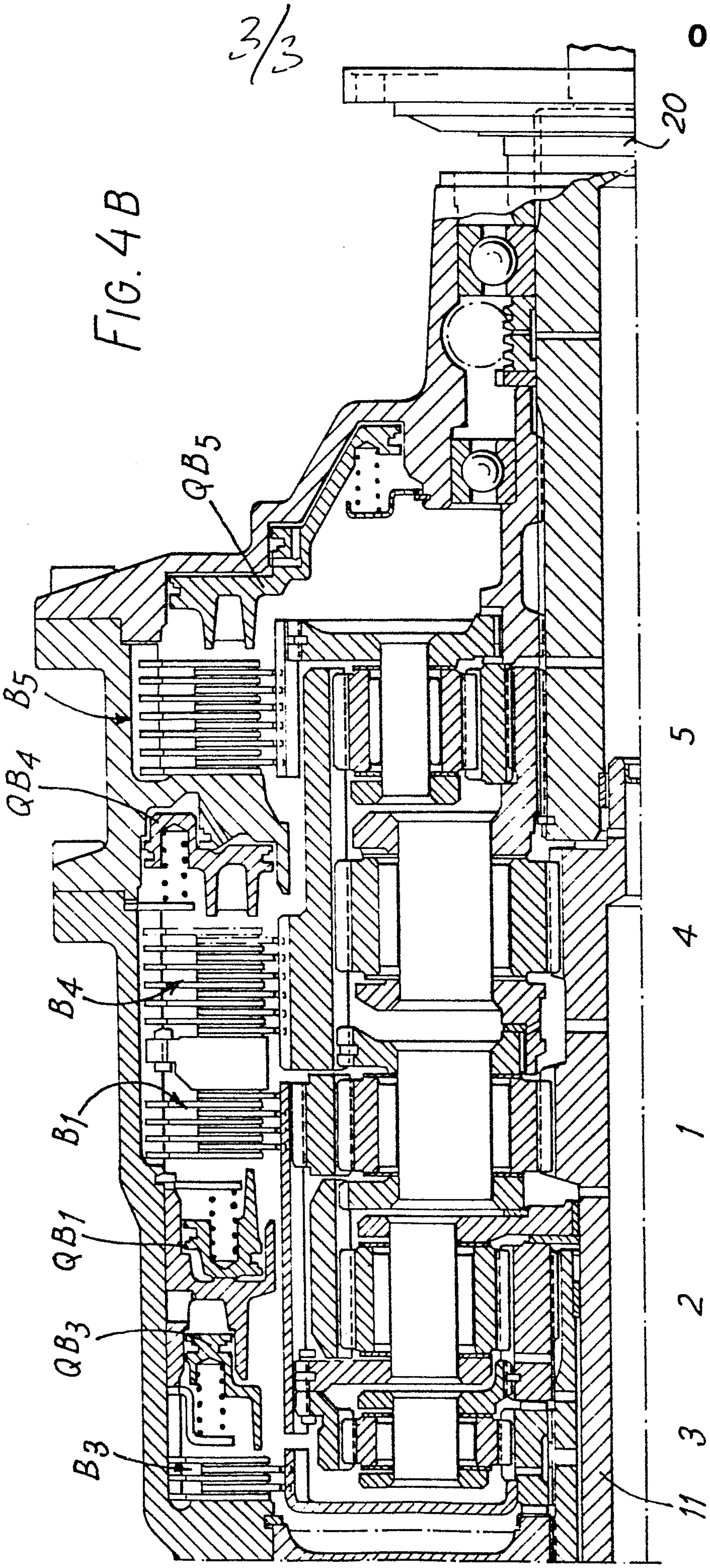


FIG. 4B